# EUROPEAN PATENT APPLICATION

(11) **EP 1 675 122 A2**
(43) Date of publication of application: **28.06.2006**
(21) Application number: 05107916.8
(22) Date of filing: 30.08.2005
(51) Int. Cl.: G11B 20/18

(54) **Information storage medium storing defect management information, method of replacing defect management information and apparatus for replacing defect management information.**

(30) Priority: 27.12.2004 JP 2004378142
(71) Applicant: KABUSHIKI KAISHA TOSHIBA, Tokyo 105-8001 (JP)
(72) Inventor: Morio, Minako, 105-8001, Tokyo (JP); Tatsuzawa, Yukiyasu, 105-8001, Tokyo (JP); Kaneshige, Toshihiko, 105-8001, Tokyo (JP); Uno, Toru, 105-8001, Tokyo (JP); Mihara, Naoto, 105-8001, Tokyo (JP); Morino, Hiroaki, 105-8001, Tokyo (JP)
(74) Representative: Henkel, Feiler & Hänzel

(57) **Abstract**

A plurality of defect management areas (DMA set groups 1 to N) are used in a ring form in such a manner that defect management information of the DMA replaces and is recorded in the next spare area while the DMA is supposed to be still sufficiently rewritable (e.g., currently used DMA sets #1-1 to #4-1 are replaced with the next DMA sets #1-2 to #4-2), and a process returns to a first defect management area again at a time when transition of the defect management information ends up to a last spare area (DMA sets #1-N to #4-N).

## Description

### BACKGROUND OF THE INVENTION

### CROSS-REFERENCE TO RELATED APPLICATIONS

This application is based upon and claims the benefit of priority from the prior Japanese Patent Application No. 2004-378142, filed December 27, 2004, the entire contents of which are incorporated herein by reference.

### 1. Field of the Invention

The present invention relates to an information storage medium (rewritable optical disc, etc.) which stores defect management information, a method of replacing defect management information, and an apparatus (recording/reproducing apparatus using a rewritable optical disc, or optical disc drive) which replaces defect management information.

### 2. Description of the Related Art

In an information storage medium capable of rewritably recording information, such as an optical disc in which a phase change is utilized, there is disposed a mechanism for compensating for "defective portions which are generated in recording" on the disc. An area for managing the generated defective portions is referred to as a defect management area (hereinafter abbreviated as DMA).

The DMA is overwritten accompanying an increase of the defective portions. In general, since characteristics of the information storage medium are degraded by the overwriting, the allowable number of overwriting times is limited. In a medium (e.g., a high-density optical disc using a blue laser, etc.) having a comparatively small allowable number of the times, the overwriting accompanying update of the DMA raises a problem. That is, there is a possibility that the DMA in which the defect management information is recorded becomes defective itself accompanying the overwriting.

To solve the above-described problem, there is a prior technique (Jpn. Pat. Appln. KOKAI Publication No. 2004-288285) in which the area for storing the defect management information (DMA) is replaceable. In this prior technique, when the DMA is judged to be defective, the DMA is replaced with and recorded in a reserved DMA, but it is difficult to set a timing when the currently used DMA is judged to be defective, and replaced. When the area is judged to be defective, in general, the error rate or the number of rewriting times is used as an index. In a state where the area preceding the area is judged to be defective, the error rate is worsened, and there is a possibility of an erroneous operation (e.g., failure in ECC correction of the defect management information read from the DMA). However, if a threshold value for the judgment is set to such an extent that there is no possibility of erroneous operation, the number of rewritable times decreases. For example, when the error rate of the currently used DMA or the replacing area is judged to be temporarily bad because of a fingerprint, dust or the like, the DMA is judged to be defective, and replaced. Even if the fingerprint, dust or the like is removed later (by cleaning the disc) so that the error rate is improved and the DMA is re-established as satisfactory, the DMA is not reused.

### BRIEF SUMMARY OF THE INVENTION

According to an embodiment of the invention, there is provided an information storage medium in which defect management information of a defect management area (DMA) supposed to be still sufficiently rewritable replaces and is recorded in a next spare area, and is returned to a first defect management area after ending transition (or shift) of the defect management information up to a last spare area, so that a plurality of defect management areas are used in a loop, circular, or ring form. Then, the plurality of DMAs disposed in the information storage medium can be thoroughly utilized.

For purposes of summarizing the invention, certain aspects, advantages, and novel features of the invention have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

### BRIEF DESCRIPTION OF THE SEVERAL VIEWS OF THE DRAWING

A general architecture that implements the various features of the invention will now be described with reference to the drawings. The drawings and the associated descriptions are provided to illustrate embodiments of the invention and not to limit the scope of the invention. Throughout the drawings, reference numbers are re-used to indicate correspondence between referenced elements. In addition, the first digit of each reference number indicates the figure in which the element first appears.

FIG. 1 is a diagram showing an outline of a data structure of an information storage medium (rewritable optical disc) according to one embodiment of the invention;

FIG. 2 is a diagram showing an outline of the data structure of a defect management area (DMA) disposed in the information storage medium according to an embodiment of the invention;

FIG. 3 is a state transition diagram showing one example of a method of using a plurality of DMA sequences according to an embodiment of the invention;

FIG. 4 is an explanatory view of a linear replacement process using the plurality of DMA sequences according to an embodiment of the invention;

FIG. 5 is an explanatory view of a ring replacement process (two examples of replacement based on the number of rewriting times and replacement based on an error rate) using the plurality of DMA sequences according to an embodiment of the invention;

FIG. 6 is an explanatory view of an example in which the plurality of DMA sequences simultaneously transit, and an example in which a part of the plurality of DMA sequences individually transit according to an embodiment of the invention;

FIG. 7 is an explanatory view of an example of a cause for erroneous detection in a case where a currently used DMA set group (e.g., DMA sets #1-3 to #4-3) is incrementally searched according to an embodiment of the invention;

FIG. 8 is an explanatory view of an example in which the plurality of DMA sequences (DMA sets #1 to #4) simultaneously transits, while filling with "FFh" or the like,the DMA set groups other than the currently used DMA set group (e.g., DMA sets #1-3 to #4-3), and an example in which a part of each DMA set group individually transits, while filling with "FFh" or the like, the DMA set group other than a part (e.g., the DMA set #2-1, #3-2, #1-3, etc.) of the used DMA set group according to an embodiment of the invention;

FIG. 9 is a diagram showing a storage location (physical sector number of the information storage medium) of each of a plurality of DMA managers and DMAs according to an embodiment of the invention;

FIG. 10 is a diagram showing an arrangement of DMA manager storage areas (DMA_Man#1DMA_Man#10) in the information storage medium according to one embodiment of the invention according to an embodiment of the invention;

FIG. 11 is a diagram showing a data structure of the DMA manager which manages a head physical sector number or the like of the currently used DMA according to an embodiment of the invention;

FIG. 12 is a diagram showing byte assignment in a disc definition structure of the information storage medium (optical disc) according to one embodiment of the invention;

FIG. 13 is a diagram showing contents of a primary defect list (PDL) according to an embodiment of the invention;

FIG. 14 is a diagram showing the data structure of each PDL entry in the PDL according to an embodiment of the invention;

FIG. 15 is a diagram showing contents of a secondary defect list (SDL) according to an embodiment of the invention;

FIG. 16 is a diagram showing the data structure of each SDL entry in the SDL according to an embodiment of the invention;

FIG. 17 is a flowchart showing one example of an update process of the DMA; and

FIG. 18 is a diagram showing a schematic constitution of an information recording/reproducing apparatus according to one embodiment of the invention.

### DETAILED DESCRIPTION OF THE INVENTION

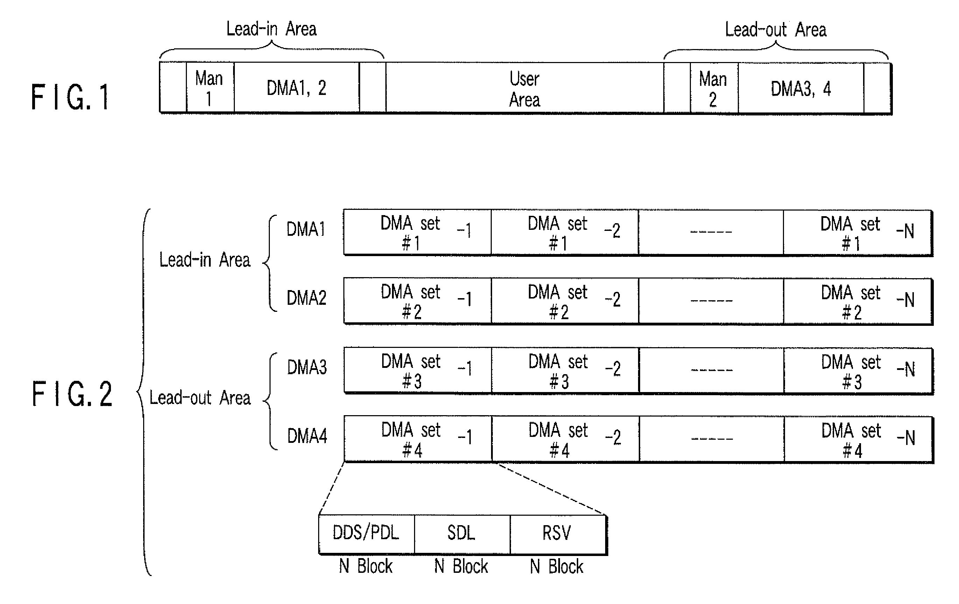

An embodiment of the invention will be described hereinafter with reference to the drawings. FIG. 1 is a diagram showing an example of a data structure of an information storage medium (e.g., a rewritable optical disc utilizing a phase change: DVD-RAM, DVD-RW, or next-generation high-density HD_DVD-RAM, HD_DVD-RW, etc., using a blue laser) according to one embodiment of the invention.

DMAs are disposed in fixed physical address areas in a medium, and the DMAs in which the same contents are stored are disposed in a plurality of portions in the medium in order to raise resistance to trouble with respect to the DMA. For example, in the HD_DVD-RAM disc according to one embodiment of the invention, the DMAs are disposed in four portions in total: two portions (DMAs 1, 2) of an innermost periphery (lead-in area) of the disc; and two portions (DMAs 3, 4) of an outermost periphery (lead-out area) of the disc. The same contents are recorded in four DMAs (DMAs 1 to 4).

A user area is an area for storing user data. Although not shown, a spare area cannot be disposed, for example, between the user area and the DMA. This spare area can be utilized as an area where data to be recorded in a defect area existing in the user area is recorded in turns. Here, the defect area is an area of an error correction code (ECC) block unit, and data of the ECC block unit is shifted to and recorded in the spare area.

In order to further enhance durability of the DMA in the information storage medium according to one embodiment of the invention, there are disposed spare DMAs (e.g., DMA sets #1-N to #4-N where N is an integer of 2 or more), so that the DMAs (e.g., DMA sets #1-1 to #4-1) being used can be shifted to new DMAs (e.g., DMA sets #1-2 to #4-2. From another standpoint, for example, if the DMAs 1 to 4 are disposed in four portions in total: two portions of the innermost periphery; and two portions of the outermost periphery, each of the four portions is provided with the spare DMAs (DMA sets #1-2 to #1-N are disposed with respect to the DMA 1, DMA sets #2-2 to #2-N are disposed with respect to the DMA 2, DMA sets #3-2 to #3-N are disposed with respect to the DMA 3, and DMA sets #4-2 to #4-N are disposed with respect to the DMA 4).

FIG. 2 shows constitutions of the four DMAs. The DMAs 1, 2 are disposed in the lead-in area disposed in the innermost periphery, and the DMAs 3, 4 are disposed in the lead-out area disposed in the outermost periphery. Each of the DMAs (DMA1, DMA2, DMA3, DMA4) is provided with a plurality of DMA reserved areas (DMA sets #1-1 to #1-N, DMA sets #2-1 to #2-N, DMA sets #3-1 to #3-N, DMA sets #4-1 to #4-N).

Here, for example, a value ofN is selected to be about 100 in a high-density optical disc which performs phase change recording using a blue laser). That is, 99 DMA set groups are prepared as DMA reserved areas (spares) with respect to one DMA set group (DMA sets #1 to #4-1). Alternatively, it can be supposed that 100 DMA set groups in total are prepared as DMA reserved areas.

As shown in FIG. 2, the information storage medium (disc) has a plurality of DMA set groups (a plurality of DMA reserved areas), and each DMA set group comprises a block of a disc definition structure/primary defect list (DDS/PDL) block, a block of a secondary defect list (SDL), a block of a reserved area (RSV) and the like. Here, the DDS is abbreviation of the disc definition structure, the PDL is abbreviation of the primary defect list, and the SDL is abbreviation of the secondary defect list. Each of the DDS/PDL block, the SDL block, and the reserved area (RSV) block is an ECC block (= 32 KB or 64 KB) unit.

Moreover, the reserved area (RSV) block is also effective in disposing a physical distance between a plurality of continuous DMA reserved areas to prevent defects from being chained. From another standpoint, a plurality of reserved areas (RSV block) exist in a discrete manner in a location where a plurality of DMA reserved areas are stored. The plurality of reserved areas (RSV block) can be utilized as condition storage locations for storing conditions or a threshold value (indicating whether or not the number of rewriting times is P, or whether or not an error rate exceeds a predetermined rate in a range in which error correction is possible with the ECC) in replacing a certain DMA set group being used with another DMA set group.

Each DMA has a size integer times that of the ECC block which is a true recording unit in a drive. One ECC block comprises 16 sectors (or 32 sectors) in the DVD-RAM disc which is the information storage medium according to one embodiment of the invention. The size of one ECC block is 32 KB (or 64 KB). The PDL is the primary defect list for initial defect registration, and the SDL is a list for secondary defect registration. In the PDL, there are registered defects found in certification executed at a time when the medium is formatted, that is, defect management information on initial defects. On the other hand, in the SDL, there are registered defects found at a usual recording time (e.g., user data recording time), that is, defect management information on secondary defects. When the sizes of the lists increase, and the spare area for recording the data of the defect block in turns is enlarged, the number of defects that can be registered increases. N DMA set groups (DMA-1 to DMA-N) are sequentially arranged, and the groups are used in order from, for example, DMA-1.

In the technique described with reference to FIG. 2, in consideration of resistance to trouble with respect to the DMA, the DMAs in which the same contents are stored are disposed in a plurality of portions (on a lead-in (LI) side and a lead-out (LO) side) of the medium, and each of the plurality of DMAs has N replacing areas 1 to N (e.g., N DMA set groups each comprising four sets). When the number of overwriting times with respect to the DMA comes close to the allowable number of overwriting times with respect to this information storage medium, or the error rate worsens, the defect management information is shifted to the next new DMA in order to hold the information of the DMA exactly, even if the current DMA is still rewritable and usable.

For example, as to the information storage medium having four DMA sequences, four DMAs are disposed in different locations. Specifically, DMA sequences 1, 2 (sequence of DMA 1 and sequence of DMA 2) are disposed in the lead-in area of the innermost periphery of the medium, and DMA sequences 3, 4 (sequence of DMA 3 and sequence of DMA 4) are disposed in the lead-out area of the outermost periphery of the medium.

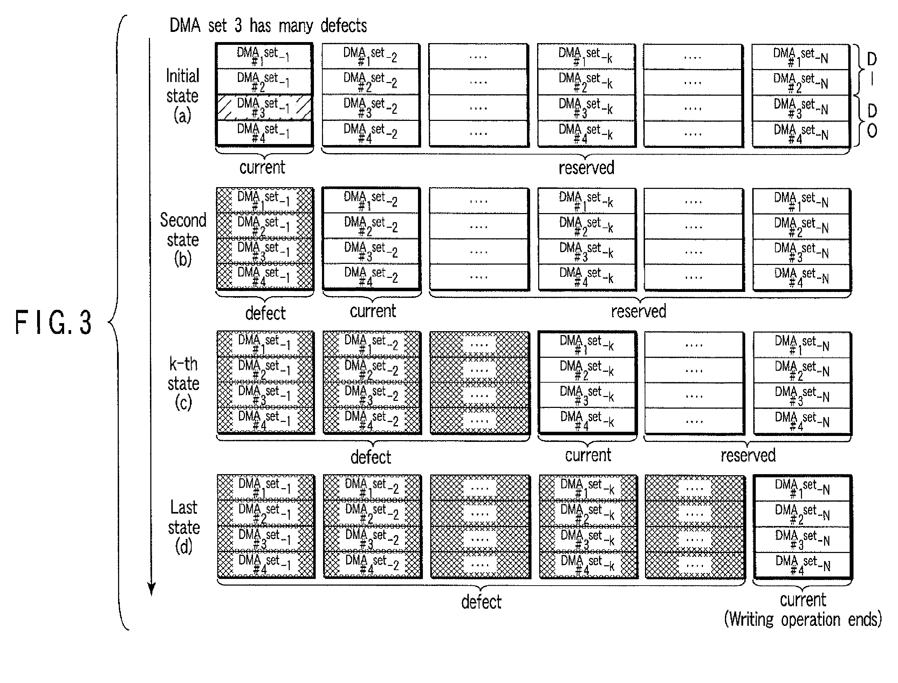

FIG. 3 is a state transition diagram showing one example of a method of using a plurality of DMA sequences (e.g., sequences of DMA 1 to DMA 4). In an initial state, it is assumed that the current defect management information is stored in a first DMA reserved area (DMA set #1-1, #2-1, #3-1, #4-1) included in each DMA (initial state of FIG. 3(a)). For example, when it is judged that there are many defects in a DMA sequence 3 (DMA set #3 with respect to the DMA set group 1 being used) among DMA sequences 1 to 4, the defect management information of the DMAs (DMA sets #1-1 to #4-1 of the DMA set group 1) being used in the DMA sequences (DMA 1 to 4) are shifted to and recorded in the next DMAs (DMA sets #1-2 to #4-2 of a DMA set group 2) (second state of FIG. 3(b)). As to a DMA switching direction, four DMA sets #1 to #4 are simultaneously and sequentially switched (DMA set group 1 → DMA set group 2 → ... → DMA set group k → ...) (k-th state of FIG. 3(c)). When the defect management information transits or changes to the last DMA (DMA sets #1-N to DMA sets #4-N of a DMA set group N), no data can be written into the information storage medium (writing operation end state of FIG. 3(d)).

In this method, when the area where the current DMA is stored is judged to be defective, the DMA linearly transits to the next DMA reserved area.

In the method of allowing the DMA to transit to the next DMA reserved area, when the number of overwriting times with respect to the DMA comes close to the allowable number of the overwriting times with respect to the medium, or when the defects increase in this DMA, and there is a possibility that any error cannot be corrected, the currently used DMA is shifted to the DMA of the next reserved area. In this case, it is supposed that the DMA preceding the DMA transition has a very bad quality level, and a readout error is easily generated. When the quality level is satisfactory to such an extent that the reading can be assumed to be securely performed, and the DMA transits to that of the next reserved area, the writing operation is prohibited at a time when the transition ends in the DMA of the last reserved area. Therefore, the allowable number of overwriting times of the whole information storage medium decreases (a large number of DMAs cannot be thoroughly or effectively utilized).

Even in one embodiment of the invention, there is a possibility that the DMA switching process is not performed in a ring form in a disc in which the DMA is less rewritten (a good-quality disc having less defect generation or a disc having a smaller number of repeated rewriting times). However, in the invention, a certain transits to the next DMA before the certain DMA actually turns into a defect area (as long as the DMA is still usable as a sufficiently highly reliable DMA).

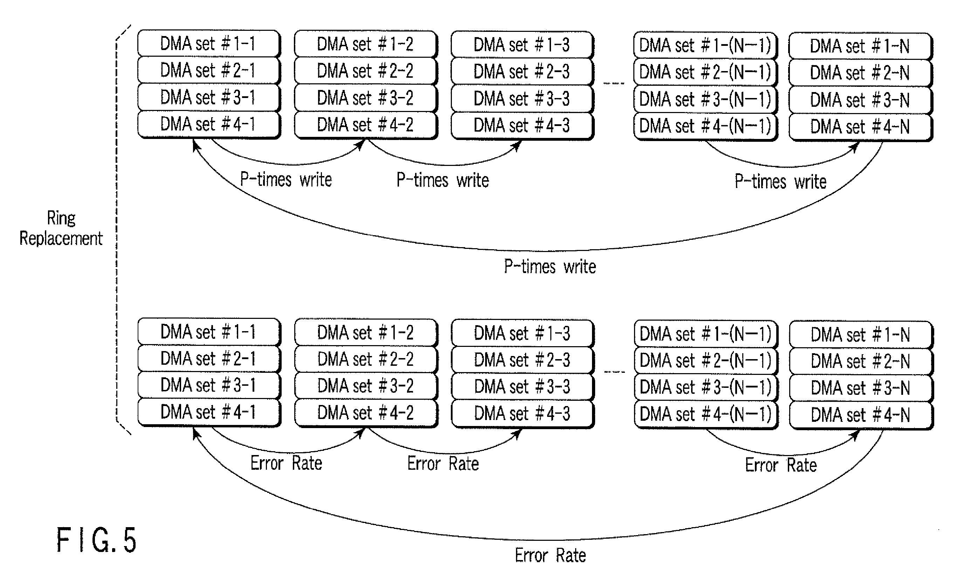

FIG. 5 is an explanatory view of a ring replacement process (two examples of replacement based on the number of rewriting times and replacement based on an error rate) using the plurality of DMA sequences (sequence of DMA 1 to sequence of DMA 4). In one embodiment of the invention, as to a timing of the DMA transition, the DMA transits while the quality of the DMA is still sufficiently satisfactory. Moreover, after the DMA transits to that of the last reserved area, the process returns to the first DMA, and the DMA is again usable. Accordingly, the DMA has a good quality level, and is recordable without decreasing the allowable number of overwriting times with respect to the whole information storage medium. This difference is observed well as compared with a method of linearly transiting to the next DMA reserved area.

A method (two examples) will be hereinafter described in which the areas are used in the circular or ring form during the transition to the DMA reserved area in order.

The upper part of FIG. 5 illustrates an example of a method in which the number of rewriting times is used as DMA transition conditions.

In the initial state, it is assumed that the current defect management information is stored in the first DMA reserved area included in each DMA (e.g., DMA set group 1 = DMA sets #1-1, #2-1, #3-1, #4-1) (initial state). When the number of rewriting times with respect to the first DMA reserved area (DMA set group 1) reaches P (i.e., it is judged that the quality level of the DMA drops to a level which is not less than a defined level), the defect management information of the first DMA reserved area is written and shifted to the next DMA reserved area (e.g., DMA set group 2 = DMA sets #1-2, #2-2, #3-2, #4-2) while the first DMA reserved area is still sufficiently usable (replacement recording of the DMA). Thereafter, similar replacement recording of the DMA is successively repeated. When the number of rewriting times with respect to the last DMA reserved area (DMA set group N) reaches P, the process returns to the first DMA reserved area (DMA set group 1) which is the next DMA reserved area. Thereafter, similar DMA replacement recording process is repeated in the ring form.

The lower part of FIG. 5 illustrates an example of a method in which the error rate is used as the DMA transition conditions.

In the initial state, it is assumed that the current defect management information is stored in the first DMA reserved area included in each DMA (e.g., DMA set group 1 = DMA sets #1-1 to #4-1) (initial state). When the error rate with respect to the first DMA reserved area (DMA set group 1) is not less than a defined value (i.e., it is judged that the quality level of the DMA drops to a level which is not less than a defined level), the defect management information of the first DMA reserved area (DMA sets #1-1 to #4-1) of each of the DMAs (DMAs 1 to 4) is shifted to the second DMA reserved area (DMA sets #1-2 to #4-2) before the first DMA reserved area is judged to be defective (i.e., although the error rate increases, the correction by the ECC is still performed without any problem) (replacement recording of the DMA). Thereafter, similar replacement recording of the DMA is successively repeated. When the error rate with respect to the last DMA reserved area (DMA set group N) reaches the defined value, the process returns to the first DMA reserved area (DMA set group 1) which is the next DMA reserved area. Thereafter, similar DMA replacement recording process is repeated in the ring form.

Here, as a material with which it is judged that the quality level drops to the level not less than the defined level, there is supposed a case where the number of overwriting times with respect to the DMA itself (P times) reaches an initially defined number (a value lower than 1000 in a storage medium which can be rewritten 1000 times), or the number of defects of the DMA itself is not less than a defined value (value in a range in which error correction is sufficiently possible).

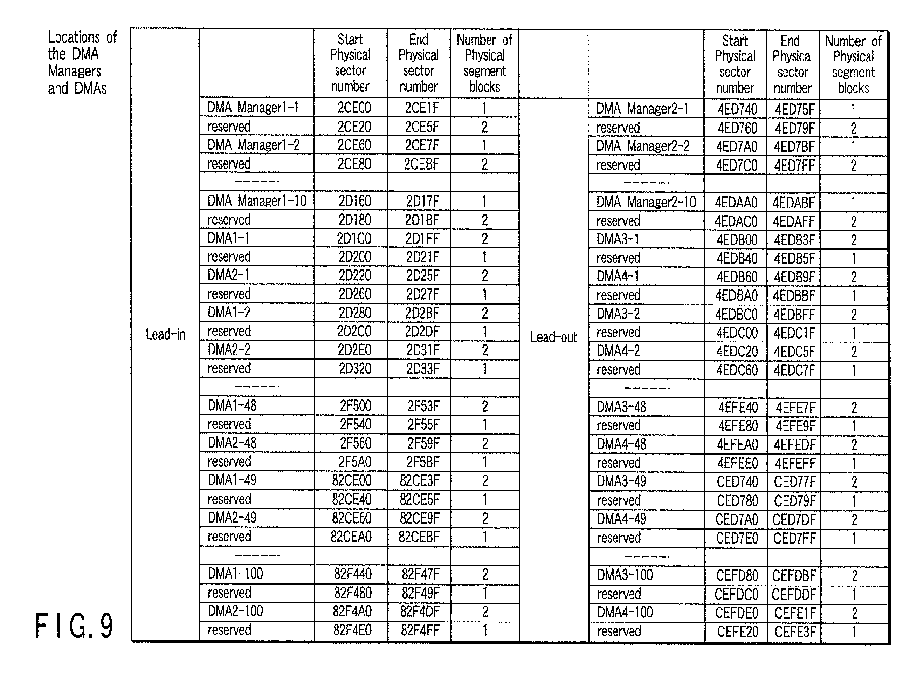

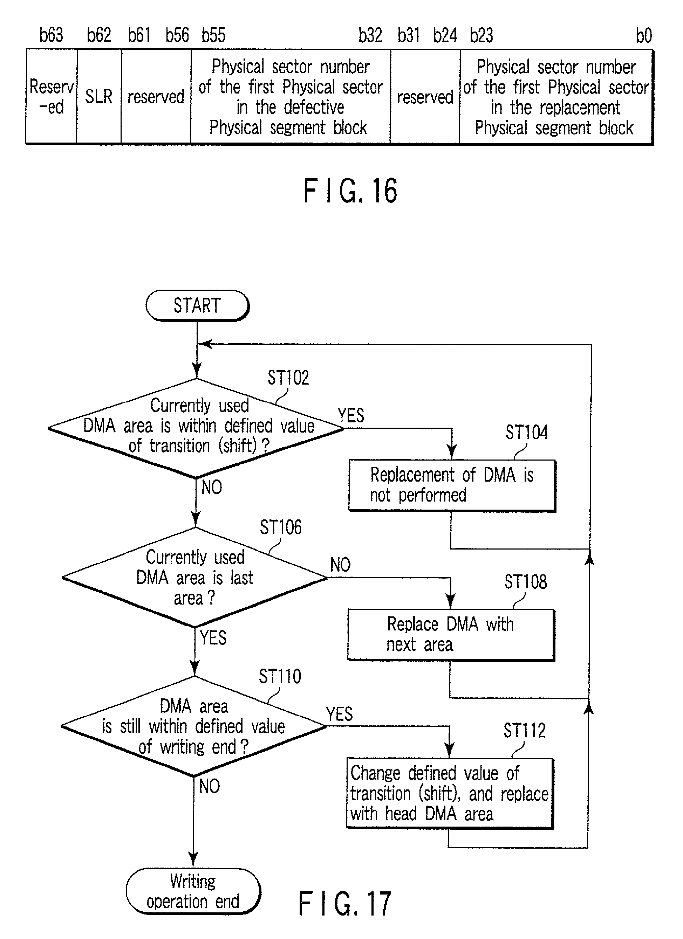

When the DMA replacement recording process is performed up to the last DMA reserved area (DMA sets #1-N to #4-N), and the quality level of the last reserved area drops to be lower than the defined level, the process returns to the first DMA reserved area (DMA sets #1-1, #2-1, #3-1, #4-1) to perform the recording again. When the recording is performed again, a threshold value is set again as new transition conditions (see ST112 of FIG. 17: the conditions threshold value after set again can be written beforehand, for example, in the reserved area or the like of FIG. 9 inside an information storage device or for each disc).

When the DMA reserved areas are repeatedly used in the circular or ring form, and thereafter the number of overwriting times with respect to the DMA comes close to the allowable number of overwriting times of the medium, or there is a possibility that the defects increase in the DMA, and no error can be corrected, the writing operation is prohibited.

As to a timing when the replacement recording in the DMA reserved area or the writing into the information storage medium ends, there is a method of judging the timing by the number of writing times, the error rate, the quality level of a signal (e.g., a partial response signal-to-noise ratio [PRSNR] or a simulated bit error rate [SbER]), or the like, or a method of judging the timing by a combination of them.

As described above, the timing of the replacement recording with respect to the DMA reserved area can be determined by a certain threshold value based on the number of writing times with respect to the DMA or the error rate. On the other hand, the timing to end the writing with respect to the information storage medium can be determined in a case where the threshold value for prohibiting the writing is exceeded by values of K areas having poor quality levels of the DMA reserved area (DMA set group) of any one (e.g., DMA 1 sequence = DMA sets #1-1 to #1-N) of the DMA sequences (e.g., DMAs 1 to 4), a case where the values of K areas having good quality levels exceed the threshold value for prohibiting the writing, a case where an average quality level exceeds the threshold value for prohibiting the writing or the like.

As the DMA transition method, in addition to the method of shifting the DMA in order without any interval, there is supposed another method in which the DMA is first shifted with intervals corresponding to I DMA reserved areas, and a portion that has not been replaced or recorded first time is written second time. In this case, the replacement process of the DMA is performed at the intervals corresponding to the I areas, and second time and thereafter, an unused DMA reserved area is subjected to the DMA replacement process. When the DMA reserved areas are used, the writing is prohibited. That is, in an embodiment, each DMA reserved area is used once. There is supposed another method in which the threshold value for the transition is changed, and the transition is continued at the intervals corresponding to the I areas again in the ring form even after the DMA reserved areas are thoroughly used. In the former method, the threshold value for the transition can be brought close to a value close to a defect value. In the latter method, the threshold value for the transition is set to be first loose, and thereafter the value can be set to be gradually severe. The latter method is the same as the method of using the DMA reserved areas in the ring form while shifting the areas in order except that the DMA reserved areas are shifted at the intervals corresponding to the I areas.

That is, when there are the even number of DMA set groups (first set group comprises DMA sets #1-1 to #4-1; N-th set group comprises #1-N to #4-N) in a ring, the DMA set groups can be replaced each zero group or each even number of groups. For example, assuming that there are four set groups in the ring, and underlined portions indicate terminal branch numbers of the skipped set groups, 123412341234123412341234..., and there is no unused DMA set group.

Moreover, when there are the odd number of DMA set groups in the ring, the DMA set groups can be replaced each odd number of groups. For example, assuming that there are five set groups in the ring, and the underlined portions indicate the skipped set groups, 12345123451234512345..., or 1234512345123451234512345123451234512345..., and there is no unused DMA set group.

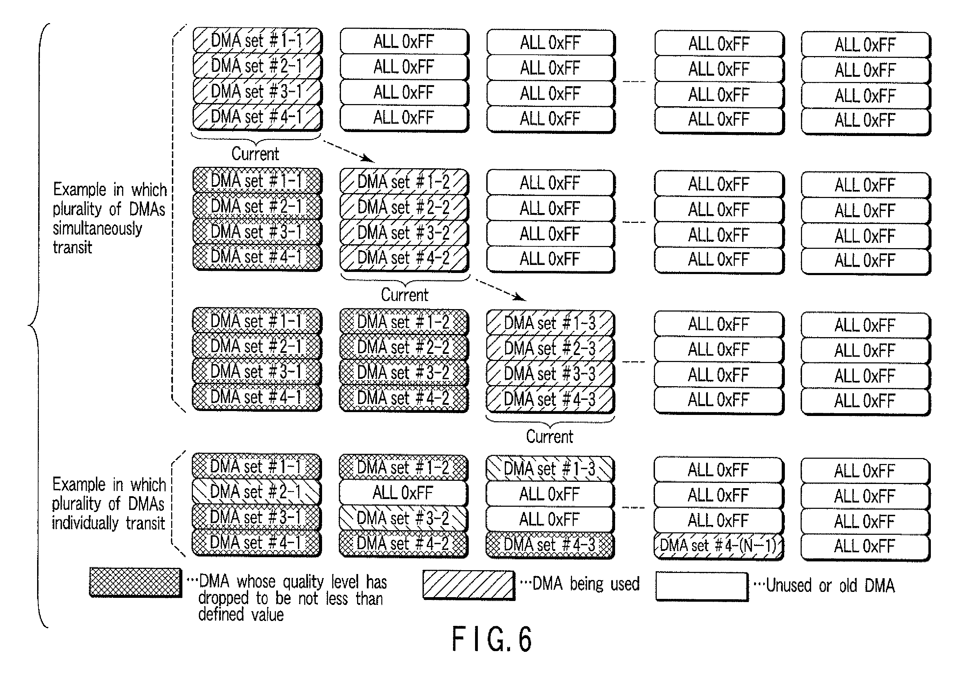

FIG. 6 is an explanatory view of an example in which the plurality of DMA sequences (sequence of DMA 1 to sequence of DMA 4) simultaneously transit, and an example in which a part of the plurality of DMA sequences (sequence of DMA 1 to sequence of DMA 4) individually transit. In the embodiment of FIG. 6, when the DMA areas are used in the ring form, the old DMA reserved areas are filled with FFh, when the process returns to the first DMA area after the DMA reserved areas are used or in a case where the process returns to the first DMA reserved area to perform the recording. FIG. 6 shows the transition of the DMA. As transition methods, there are shown a method of simultaneously shifting four sets, and a method of individually shifting the sets.

That is, four sets are simultaneously shifted in the same manner as described with reference to FIG. 5. On the other hand, when the areas are individually shifted, instead of regarding a plurality of DMA sequences as a set (e.g., as to the sequence of the DMA 1 to that of the DMA 4, there are four sets), and replacing the next DMA reserved area, it is individually judged for each sequence whether or not the transition is required, and the DMA is shifted. For example, when four DMA sequences are individually shifted in this manner, sequences that do not have any scratch or the like are usually usable even in a case where a certain sequence is not usable because of a scratch or the like. Therefore, the DMA reserved area can be effectively used.

Moreover, for example, supposing that the sequence of the DMAs 1, 2 is positioned in the lead-in area, and the sequence of the DMAs 3, 4 is positioned in the lead-out area, the DMAs 1, 2 are physically distant from the DMAs 3, 4, they are not easily influenced by scratches, fingerprints, dust or the like, and reliability of the defect management information of the DMA is enhanced. Additionally, in this case, there is a possibility that the time for finding the currently used DMA is long compared with the case where the currently used DMAs exist together in one DMA set group.

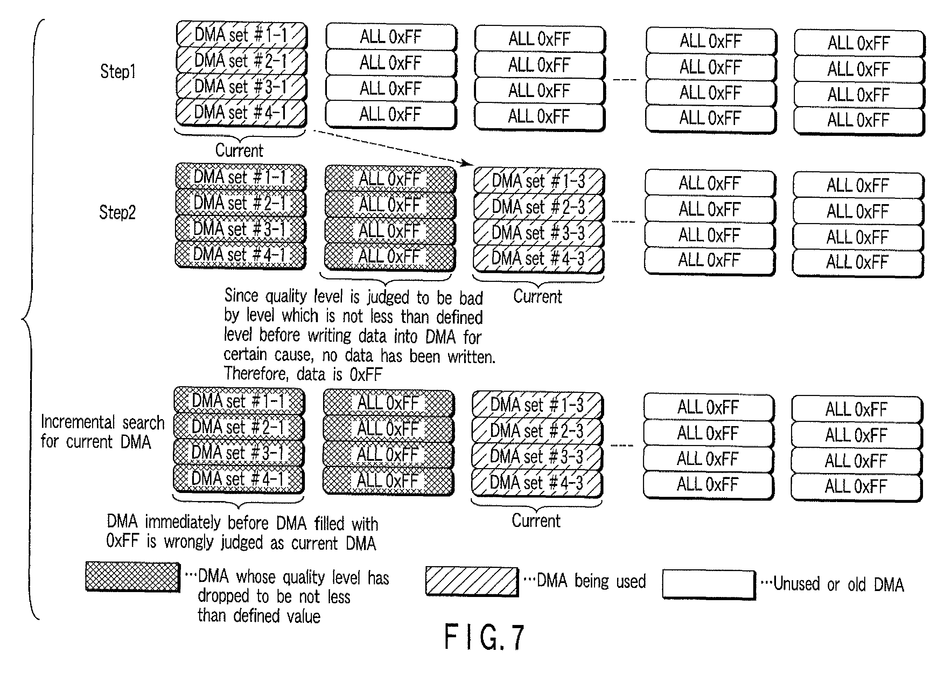

FIG. 7 is an explanatory view of an example of a cause for erroneous detection in a case where a currently used DMA set group (e.g., DMA sets #1-3 to #4-3) is incrementally searched. As a method of searching for the currently used DMA, there is a method in which the currently used DMA is searched for while incrementing each of a plurality of DMA reserved areas in order (incremental search). The DMA searching method will be described in which, for example, the unused DMA areas are filled with FFh beforehand.

In this method, the DMAs are read in order, and the DMA area is searched for where the data indicates FFh. Moreover, it is judged that a DMA preceding the DMA where the data indicates FFh is the currently used DMA.

Usually, as to the first DMA reserved area (DMA sets #1-1 to #4-1 in step 1 of FIG. 7) being used, when the quality level is bad by a level that is not less than the defined level, the defect management information can be shifted to the second DMA reserved area (DMA sets #1-2 to #4-2 in step 2 of FIG. 7). However, when it is judged for a certain cause (e.g., a scratch, dust, fingerprint, etc.) that the second DMA reserved area has a bad quality level which is not less than the defined level, it is supposed that the defect management information is shifted to a third reserved area (DMA sets #1-3 to #4-3 in step 2 of FIG. 7) or the subsequent reserved area. In this case, any defect management information is not shifted to the second DMA reserved area (DMA sets #1-2 to #4-2 in step 2 of FIG. 7) judged to have the bad quality level that is not less than the defined level defined, and therefore the data remains to be FFh. By use of the above-described method of judging that the DMA preceding the DMA whose data is FFh is the currently used DMA, the second DMA reserved area is not used, and therefore the data remains to be FFh. Therefore, the first DMA area preceding the second area is wrongly judged to be the currently used DMA.

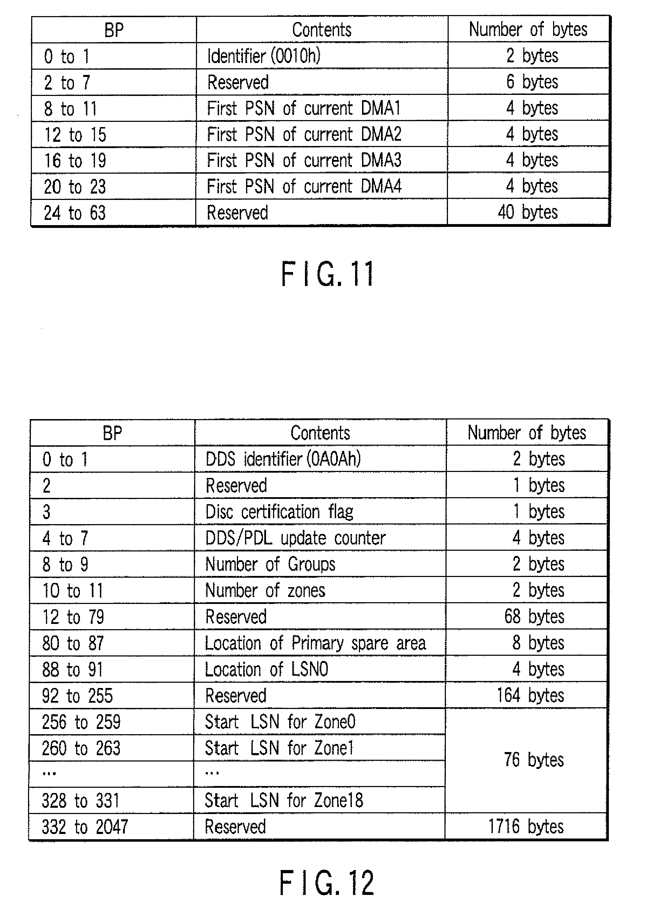

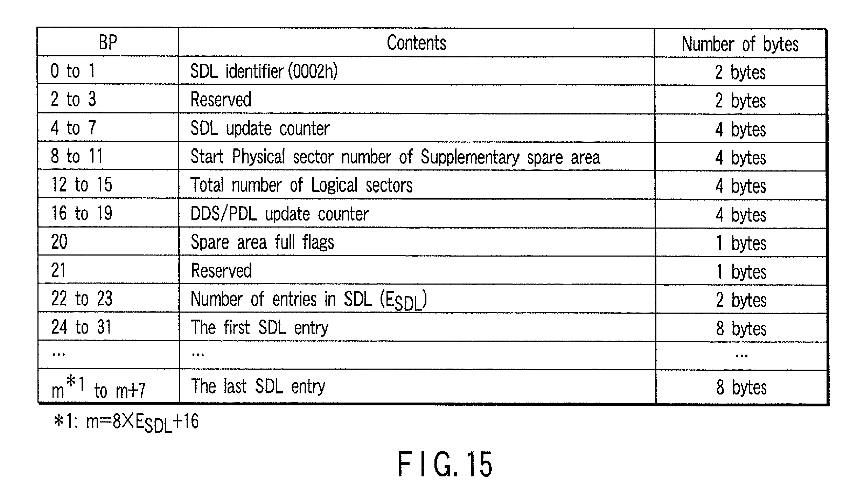

As a method of preventing the erroneous judgment, unlike the above-described incremental searching method for simply detecting FFh, there is a method in which contents written in the respective DMA sequences are compared with one another to determine a latest DMA. For example, when a value of an update counter (DDS/PDL update counter of FIG. 12, SDL update counter of FIG. 15) included in each DMA reserved area is maximum, the corresponding DMA can be judged to be the latest DMA.

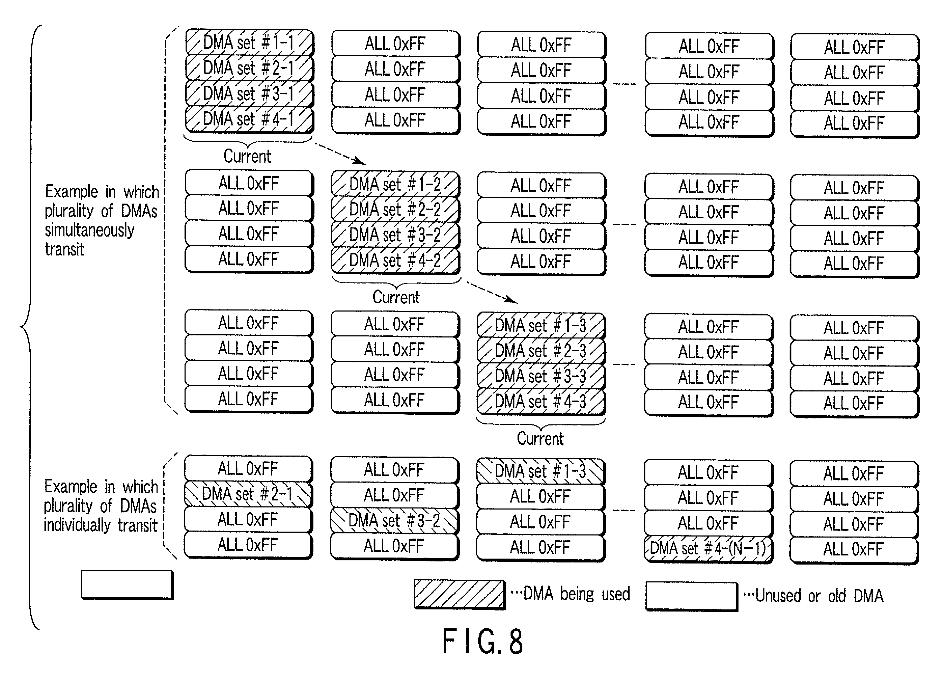

FIG. 8 is an explanatory view of an example in which the plurality of DMA sequences (sequence of DMA 1 to that of DMA 4) simultaneously transit, while filling with "FFh" or the like, the DMA set groups other than the currently used DMA set group (e.g., DMA sets #1-3 to #4-3 of a third row from above in FIG. 8), and an example in which the respective DMA sets individually transit while filling with "FFh" or the like the DMA set group other than the currently used DMA sets (the DMA set #2-1, #3-2, #1-3, #4-(n-1) in FIG. 8) of the plurality of DMA sequences.

The example of FIG. 8 is different from that of FIG. 6 or 7 in that DMAs other than the currently used DMAs are overwritten with "FFh" or the like. For example, in the example of FIG. 7, when the DMA recorded in the first DMA reserved area in step 1 is shifted to the third reserved area, not the second reserved area for a certain cause, the DMA preceding the first DMA whose "data is FFh" is judged to be the latest DMA. In this incremental search, the second reserved area is wrongly judged to be the latest DMA. To prevent this erroneous judgment, as in the example of FIG. 8, for example, the DMAs other than the currently used DMAs are written with FFh. Accordingly, even in the DMA reserved area in which the DMA is not shifted for the certain cause as in FIG. 7, the DMA reserved area other than FFh is searched for, so that the latest DMA can be found exactly.

To write FFh into of the DMA reserved areas other than the latest DMA, for example, after shifting the latest DMA to the next reserved area, FFh is written into the DMA reserved area before shifted. By this constitution, the latest DMA can be easily searched for by the increment search, and it is possible to find out the currently used DMA at a higher speed.

When the defect management information is recorded in the DMA reserved area during the transition of the ring form, as the conditions of the transition, there is supposed a case where the number of overwriting times with respect to the currently used DMA reaches the defined number (e.g., a number lower than 1000, for example, in a storage medium which is rewritable 1000 times) first determined, a case where the error rate of the DMA itself is not less than a defined rate (not less than the error rate at which the error can be sufficiently corrected) or the like.

For example, it is assumed that the DMA area transits when the number of overwriting times reaches the defined number. In this case, the current number of overwriting times with respect to the DMA are recorded somewhere beforehand. As a storage location, there is supposed a reserved area (shown by "Reserved" in FIG. 9) of each DMA, a reserved area (shown by "Reserved" in FIGS. 12, 15) in DDS/PDL, SDL area of each DMA reserved area, a reserved area (shown by "Reserved" in FIG. 11) of a DMA manager for storing location information of the DMA reserved area being used or the like.

For example, it is supposed that the information is stored in the reserved area (shown by "Reserved" in FIG. 12, 15) in the DDS/PDL, SDL area of each DMA reserved area. Since the DDS/PDL, SDL area is individually rewritten, a counter for counting the number of overwriting times can be individually disposed. Therefore, there is supposed a method in which each of the DDS/PDL block and the SDL block is provided with a DMA recording counter area, a larger number of the DMA recording counters exceeds the defined number, and then the DMA transits to the next DMA.

Moreover, areas for storing the DDS/PDL update counter (see FIG. 2) and the SDL update counter (see FIG. 15) are defined beforehand in predetermined areas of the DDS/PDL block and the SDL block. The counters are incremented in a case where the DDS/PDL block and the SDL block are rewritten. Therefore, among the DDS/PDL and SDL update counters, the counter indicating a larger value can be judged to be the recording counter af the DMA reserved areas.

For example, when each DMA reserved area (shown by "Reserved" in FIG. 9) is used, it is supposed that the DMA recording counter of each of the DDS/PDL and SDL blocks is disposed somewhere in this area. Moreover, when the reserved area (shown by "Reserved" in FIG. 11) of the DMA manager is used, it is supposed that the DMA recording counter of each of the DDS/PDL and SDL blocks is disposed somewhere in this area.

Additionally, there are a plurality of DMA sequences, and each of the DMA sequences has the DMA reserved area. Therefore, it is difficult to record the number of recording times with respect to each of the DDS/PDL and SDL blocks of each of the DMA reserved areas of each DMA sequence. In this case, there is supposed a method in which the largest number of recording times or an average value among the plurality of DMA reserved areas of each DMA sequence is stored for each DMA sequence (e.g., four values in a case where the DMAs 1 to 4 are disposed).

Here, for example, there is supposed a case where the DMA area transits at a time when the DMA has a bad error rate that is not less than the defined rate. When the data is read/written with respect to the currently used DMA reserved area, the error rate is measured. This measured value is compared with the threshold value which is the conditions for the transition of the DMA reserved area defined separately. When the value exceeds the threshold value, the defect management information is moved to the next DMA reserved area.

Additionally, combined use of the number of overwriting times and the error rate is also supposed. In this method, the DMA area transits in a case where the error rate worsens by a certain rate or more although the defined number of overwriting times is not obtained, or a case where the number of overwriting times indicates a certain or more value although the error rate does not reach the threshold value or more. Accordingly, it is possible to further enhance reliability against damages in repeatedly rewriting DMA portions.

When the DMA reserved area transits in the ring form, and the information is written in the same DMA reserved area second or subsequent time, the conditions for the transition are set to be looser than that of the first time. When the total number of overwriting times of the respective reserved areas is used as the threshold value for the transition, the threshold value of the defined number is set to be larger than that of the first time. When the conditions are set by the error rate, the threshold value of the error rate is set to be higher than that of the first time. There is supposed a case where the threshold value for the transition is stored in a memory of the information storage device, or written in the information storage medium, When the value is written in the information storage medium, as a storage location, there is supposed a reserved area (shown by "Reserved" in FIG. 9) of each DMA, a reserved area (shown by "Reserved" in FIG. 12, 15) in the DDS/PDL or SDL area of each DMA reserved area, a reserved area (shown by "Reserved" in FIG. 11) of the DMA manager for storing the location information of the DMA reserved area being used or the like.

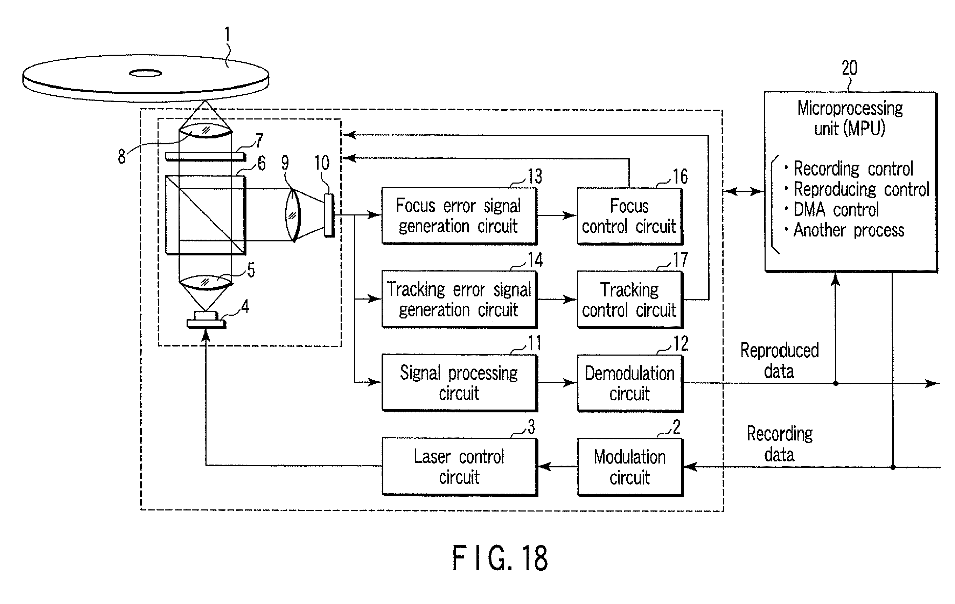

According to one embodiment of the invention, an information recording/reproducing apparatus (see FIG. 18) is constituted to handle a table lookup system in which the location of the currently used DMA reserved area is read from the DMA manager (see FIG. 11 for contents of the DMA manager) and/or an incremental system in which each DMA sequence reserved area is checked in order to search for the latest DMA reserved area as a method of finding the currently used DMA. Examples of the incremental system supposedly include a method of searching for FFh of the DMA reserved area as described above, and a method of comparing the contents of the DMA reserved areas with one another. In the table lookup system, the location information of the DMA being used, which is recorded in the DMA manager, is read and searched. This system is more exact and is performed at a higher speed as compared with the incremental system in which the respective DMAs are searched in order. Therefore, the table lookup system is preferably preferentially used. Basically, the incremental system can be used in a case where the DMA reserved area being used cannot be found in the table lookup system.

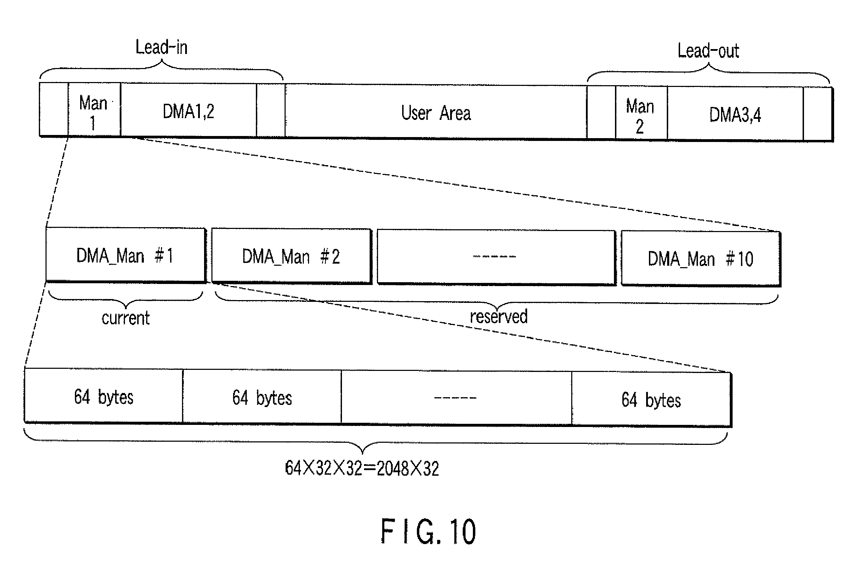

The DMA manager is rewritten, when the DMA reserved area is updated. Therefore, compared with the DMA reserved area, the frequency of rewriting is small, and there is a less possibility that the manager is damaged. However, since the DMA manager is an area for storing the location information of each DMA reserved area, the DMA manager is also provided with the reserved area in the same manner as in the DMA in order to enhance resistance to trouble. For example, in order to enhance the resistance to trouble, the reserved areas are disposed in two areas of the lead-in area of the innermost periphery and the lead-out area of the outermost periphery. These areas are physically distant from each other, and both of them are provided with spare DMA manager areas, respectively (see FIGS. 9, 10). Each of the two DMA manager areas has a plurality of reserved areas, and the areas are shifted in the same manner as in the DMA reserved areas. As the transition method, as described with respect to the DMA reserved areas, there is supposed a method in which the reserved areas, transiting when judged to be defective, are linearly used, or a method in which a reference value is disposed with respect to the number of rewriting times or the error rate, and the areas, transiting when judged to exceed the reference value, are used in the ring form.

FIG. 9 is a diagram showing a storage location (physical sector number of the information storage medium) of each of a plurality oF DMA managers and DMAs. There are ten DMA managers 1 stored in the lead-in area of FIG. 1, there are 100 DMAs 1 or 2 stored in the lead-in area, and a plurality of reserved areas are inserted between the individual DMA managers 1 and between the DMAs 1, 2. There are ten DMA managers 2 stored in the lead-out area of FIG. 1, there are 100 DMAs 3 or 4 stored in the lead-in area, and a plurality of reserved areas are inserted between the individual DMA managers 2 and between the DMAs 3, 4. Physical segments for one block are assigned to information of each DMA manager and each DMA, and physical segments for two blocks are assigned to each reserved area. The physical segments for one block comprise 16 sectors (or 32 sectors), and each of the physical segments for one block has a size of 32 KB (or 64 KB).

At least one (both are shown in the example of FIG. 9) of the lead-in area and the lead-out area has a plurality of reserved areas which exist in a discrete manner. At least one of these reserved areas is usable as a conditions storage location to store conditions or a threshold value (whether or not the number of rewriting times reaches P, whether or not the error rate exceeds a predetermined rate in a range in which the error can be corrected with the ECC or the like) based on which the DMAs are shifted (replaced and recorded). The number of the reserved areas for use is small (one at minimum) as long as an amount of the information of the conditions or the threshold value is small. However, when the information amount increases, the reserved areas are used as many as the information. When the replacement conditions are written into the plurality of reserved areas stored in the discrete manner as shown in FIG. 9, the storage locations of the replacement conditions or the like are not locally concentrated, the ECC correction easily works, and the areas are resistant to errors generated by scratches or the like.

FIG. 10 is a diagram showing an arrangement of DMA manager storage areas (DMA_Man#1DMA_Man#10) in the information storage medium according to one embodiment of the invention. As shown in FIG. 10, the DMAs 1, 2 are disposed in the lead-in area disposed in the innermost periphery of the information storage medium, and the DMAs 3, 4 are disposed in the lead-out area disposed in the outermost periphery of the information storage medium. Each of the DMAs (DMAs 1, 2, 3, and 4) is provided with a plurality of DMA reserved areas (DMA sets #1-1 to #1-N, DMA sets #2-1 to #2-N, DMA sets #3-1 to #3-N, DMA sets #4-1 to #4-N). In the initial state, current (latest) defect management information is stored in the first DMA reserved area (DMA sets #1-1, #2-1, #3-1, #4-1) included in each DMA.

When the first DMA reserved area (e.g., DMA set #1-1) included in a certain DMA (e.g., DMA set group 1) fits the conditions for the transition, in the DMAs (DMAs 1 to 4) or individually in the DMA (any of the DMAs 1 to 4) to which the transition conditions are applied, the defect management information stored in the first DMA reserved area (DMA sets #1-1 to #4-1) is shifted to the DMAs (DMAs 1 to 4) or the second DMA reserved area (DMA sets #1-2 to #4-2) of each of the DMAs (any of the DMAs 1 to 4).

As described above, the DMA reserved area being used transits in the information storage medium according to one embodiment of the invention. Accordingly, the DMA manager is introduced in order to search for the DMA reserved area being used from a plurality of DMA reserved areas in a short time. That is, according to one embodiment of the invention, as shown in FIG. 10, the information storage medium is provided with manager storage areas (Man 1, Man 2) in which the DMA managers are stored. The DMA manager manages an address of the DMA reserved area being used. In other words, the manager storage area is a location information area to store location information of the DMA reserved area being used.

For example, the address (storage location in the disc) of the "DMA being used" shown in FIG. 6 or 8 is instantly seen from the location information stored in the DMA manager without performing the above-described incremental search.

Furthermore, each of the DMA manager storage areas (Man 1, Man 2) is provided with a plurality of manager reserved areas. This is a measure against a defect of the DMA manager. As shown in FIG. 10, one manager storage area (Man 1) is provided with, for example, ten manager reserved areas (DMA_Man#1 to DMA_Man#10). Similarly the other manager storage area (Man 2) is also provided with ten manager reserved areas (DMA_Man#1 to DMA_Man#10).

For example, in an initial stage, the location information indicating the DMA reserved area being used is stored in a first manager reserved area (DMA_Man#1) included in each manager storage area (Man 1, Man 2). Accompanying the overwriting, when the first manager reserved area (DMA_Man#1) included in a certain manager storage area (Man 1) fits the transition conditions, the location information stored in the first manager reserved area (DMA_Man#1) of each of the manager storage areas (Man 1, Man 2) is shifted (written) to the second manager reserved area (DMA_Man#2) of each of the manager storage areas (Man 1, Man 2).

In this case, as the conditions for the transition of the DMA manager, as described with respect to the conditions for shifting the DMA reserved area, there is supposed a case where the area is judged to be defective, a case where the number of overwriting times exceeds the threshold value, a case where the error rate exceeds the threshold value or the like. As to the transition method, there is supposed a method in which the reserved areas are used linearly, or a method in which the threshold value of the transition is set to be loose first time, the reserved areas are used in the ring form, and the threshold value of the transition is set to be gradually severe in writing the information into the reserved area second or subsequent time.

The DMA manager has a smaller rewriting frequency as compared with the DMA. The manager storage area (Man 1, Man 2) to store the DMA manager has less possibility that the area becomes defective because of the overwriting as compared with the DMA. However, the DMA manager cannot be read from the manager reserved area because of a scratch, fingerprint or the like in some cases. Therefore, one DMA manager is provided with a plurality of areas (two areas of Man 1, Man 2 in this example) having the same contents (location information of the DMA being used). That is, the same contents are multiplexed and written into the manager reserved area. Consequently, even when the error cannot be corrected in the ECC block, the location information of the DMA being used can be read. Additionally, each of the DMA managers (Man 1, Man 2) is provided with ten spare areas (DMA_Man#1 to DMA_Man#10) to enhance durability.

Additionally, one DMA manager is stored in one manager reserved area. The manager reserved area comprises one ECC block. The same contents are multiplexed and written every 64 bytes in one ECC block constituting the manager reserved area. For example, the location information of the DMA reserved area being used is multiplexed and written every 64 bytes. It is assumed that one ECC block comprises 32 sectors. It is also assumed that one sector has a size of 2048 bytes. That is, the size of one ECC block is assumed to be 2048 bytes*32 sectors. In this case, the same contents are recorded in each sector 32 times. That is, 32*32 contents are repeatedly recorded in one ECC block. Consequently, even in a case where there are many defects to such an extent that any ECC block cannot be corrected, it is possible to read correct information (location information of the DMA being used) with a considerable probability as long as the ECC block can be partially corrected.

Here, the multiplex writing for 64 bytes has been described, but the invention is not limited to this example. If one data line in one ECC block has a size of 172 bytes, the error can be sometimes corrected in the data line of 172 bytes, although the error cannot be corrected in the whole ECC block. This respect is noted, and the same information is multiplexed and written in a data size (e.g., 64 bytes) which is sufficiently smaller than 172 bytes. Consequently, even if the error cannot be corrected in the whole ECC block, the error is corrected each data line, and correct data can be obtained.

FIG. 11 is a diagram showing a data structure of the DMA manager which manages a head physical sector number or the like of the currently used DMA. As shown in FIG. 11, the DMA manager manages the addresses of four DMA reserved areas being used. For example, assuming that the DMA reserved area being used is the DMA set group 1, the DMA manager manages the respective addresses (head physical sector number PSN) of the respective DMA sets #1-1, #2-1, #3-1, #4-1. If the location of the DMA reserved area being used can be uniquely specified, not the addresses of the DMA reserved areas but area numbers (1 to N in the example of FIG. 2) can be described in the DMA manager.

As shown in FIG. 11, the DMA manager (Man 1, Man 2) exists in at least one of the lead-in area and the lead-out area of the information storage medium (optical disc) (the managers exist in both of the areas in this embodiment). The manager includes the information indicating a head location of one currently used DMA (e.g., the DMA set group 1 comprising the DMA sets #1-1 to #1-4) among a plurality of DMAs (replacing areas) and one or more reserved areas. At least one of the reserved areas can be used as a condition storage location to store the conditions or the threshold value (whether or not the number of rewriting times reaches P, whether or not the error rate exceeds the predetermined rate in a range in which the error can be corrected with the ECC or the like) indicating the time to perform transition between the DMAs (replacement recording).

FIG. 12 is a diagram showing byte assignment in a disc definition structure of the information storage medium (optical disc) according to one embodiment of the invention. FIG. 12 shows one example of the contents described in a head sector of the DDS/PDL block included in the DMA. In the predetermined area (disc definition structure) of the DDS/PDL block, a four-byte DDS/PDL update counter, one or more reserved areas and the like are disposed. The DDS/PDL update counter is a counter which is incremented (+1) each time the contents of the DDS/PDL block are updated. At least one of a plurality of reserved areas is usable as the condition storage location to store the conditions or the threshold value (whether or not the number of rewriting times reaches P, whether or not the error rate exceeds the predetermined rate in the range in which the error can be corrected in the ECC and the like) indicating the time to perform the transition (replacement recording) between the DMAs.

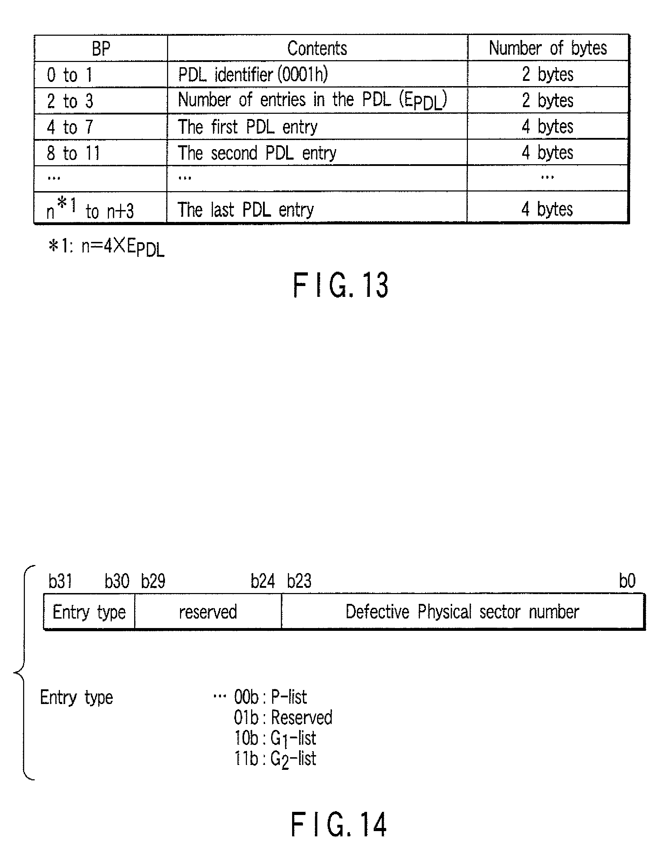

FIG. 13 is a diagram showing contents of a primary defect list (PDL). The PDL can have a plurality of PDL entries. FIG. 14 is a diagram showing the data structure of each PDL entry in the PDL. Each PDL entry comprises an entry type, a reserved area, and information such as a defect physical sector number. Here, the entry type is information for identifying information (P-list) of a defect sector described by a manufacturer of the medium (disc), reservation, information (G1-list) of the defect sector found in a verification step, and information (G2-list) of the defect sector transferred (or transcribed) from the SDL without any verification. The information of the defect physical sector number includes the physical sector number of a physical segment block having a defect. Moreover, at least one of the reserved areas existing for many PDLs, or a PDL entry area which is not registered can be used as the condition storage location to store the conditions or the threshold value (whether or not the number of rewriting times reaches P, whether or not the error rate exceeds the predetermined rate in a range in which the error can be corrected with the ECC or the like) indicating the time to perform the transition (replacement recording) between the DMAs.

FIG. 15 is a diagram showing contents of a secondary defect list (SDL). The SDL can have a plurality of SDL entries. FIG. 16 is a diagram showing the data structure of each SDL entry in the SDL. Each SDL entry comprises, for example, eight bytes. One SDL entry comprises: an SLR flag bit indicating whether or not a defect physical segment block is replaced with a spare physical segment block; information in which the physical sector number of a first physical sector in the defect physical segment block is described; information in which the physical sector number of the first physical sector in the replaced physical segment block is described; and a plurality of reserved areas. Here, at least one of the reserved areas existing for many SDLs or the reserved area (BP 2 to 3, 21, etc.) shown by "Reserved" in FIG. 6 is usable as the condition storage location to store the conditions or the threshold value (whether or not the number of rewriting times reaches P, whether or not the error rate exceeds the predetermined rate in a range in which the error can be corrected with the ECC or the like) indicating the time to perform the transition (replacement recording) between the DMAs.

FIG. 17 is a flowchart showing one example of an update process of the DMA. The process of this flowchart can be executed by firmware (DMA control program) included in a microprocessing unit 20 of FIG. 18 described later.

First, it is checked whether or not the DMA being used is to be shifted (or changed) to another DMA, that is, whether or not the current situation falls within the defined value (threshold value of the transition) (it is checked in the example of FIG. 5 whether or not the number of rewriting times with respect to the corresponding DMA is less than P that is the predetermined number of the times, or whether or not the error rate of the corresponding DMA exceeds a predetermined level in a range in which the ECC correction is possible). When the DMA is not to be shifted in the situation (YES in step ST102), the replacement of the DMA is not performed (step ST104), and the process returns to the first step.

When the current situation exceeds the defined value of the transition (e.g., when the number of rewriting times with respect to the corresponding DMA reaches P) (YES in step ST102), it is checked whether or not the DMA being used is the last DMA (it is checked in the example of FIG. 5 whether or not the DMA is a DMA set group N). When the DMA is not the last DMA (NO in step ST106), the DMA is replaced with the next DMA (step ST108). In the example of FIG. 5, for example, when the DMA set group 1 is overwritten P times, the defect management information of the DMA set group 1 is written and shifted to the next DMA set group 2 while the DMA set group 1 is still sufficiently usable (step ST108).

When the DMA being used is the last DMA (YES in step ST106), it is checked whether or not the last DMA (DMA set group N in the example of FIG. 5) still falls within the defined value of the writing end (i.e., the DMA is still overwritable). When the last DMA (DMA set group N) still falls within the defined value of the writing end (YES in step ST110), the defined value (threshold value) of the transition (shift) of the DMA is set again (step ST112), and the process returns to step ST102.

As a method of setting the defined value (threshold value) again, there is also supposed a method in which the speed of the DMA transition is set to be moderate, high, or constantly prevented from being changed with an increase of the number of overwriting times. The speed is changed in accordance with the situation in this manner. For example, when the number of overwriting times is small, the error rate is small. Therefore, the DMA transition is performed at a moderate speed, and the threshold value is corrected with the increase of the number of overwriting times.

When the similar process is thereafter repeated in the ring (loop) form, and the last DMA (DMA set group N) exceeds the defined value of the writing end (NO in step ST110), the writing operation ends there. Thereafter, the information storage medium (optical disc) is handled so that the information can be reproduced, but further repeated recording (overwriting) cannot be performed.

It is to be noted that the next DMA set group in step ST108 is not limited to a group disposed right adjacent to the DMA set group being used, and the DMA set group after skipping one or more groups can be used. In this case, when there are the even number of the DMA set groups (first set group comprises DMA sets #1-1 to #4-1; N-th set group comprises DMA sets #1-N to #4-N) in the ring, zero or the even number of the DMA set groups can be skipped in the replacement. When there are the odd number of the DMA set groups in the ring, the odd number of the DMA set groups can be skipped in the replacement.

FIG. 18 is a diagram showing a schematic constitution of an information recording/reproducing apparatus according to one embodiment of the invention. This information recording/reproducing apparatus records user data with respect to an information storage medium (optical disc) 1 described above, or reproduces the user data recorded in the medium 1. This information recording/reproducing apparatus executes a replacement process if needed.

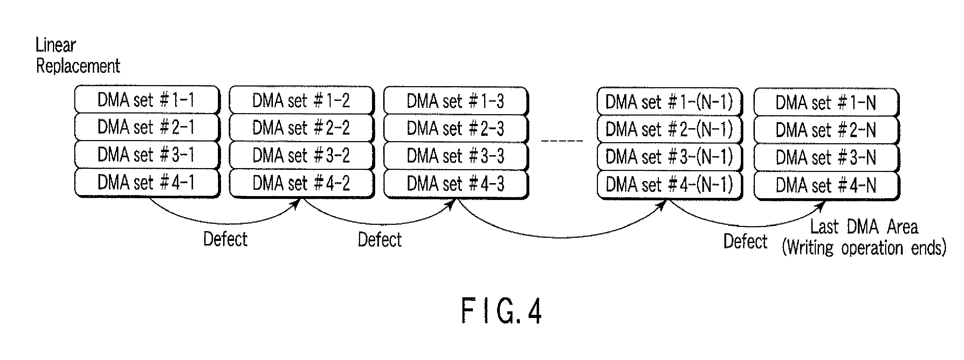

As shown in FIG. 18, the information recording/reproducing apparatus comprises: a modulation circuit 2; a laser control circuit 3; a laser unit 4; a collimator lens 5; a polarized beam splitter (hereinafter abbreviated as the PBS) 6; a 1/4 wavelength plate 7; an objective lens 8; a condenser lens 9; a photodetector 10; a signal processing circuit 11; a demodulation circuit 12; a focus error signal generation circuit 13; a tracking error signal generation circuit 14; a focus control circuit 16; a tracking control circuit 17; and the microprocessing unit (MPU) 20. The MPU 20 comprises a ROM in which firmware for executing controls such as recording control, reproducing control, and DMA control (control comprising the ring DMA replacement process described with reference to FIGS. 1 to 17) is written, a working RAM and the like.

The MPU 20 controls a driving section or the like. The driving section includes the modulation circuit 2, the laser control circuit 3, the laser unit 4, the collimator lens 5, the polarized beam splitter (PBS) 6, the 1/4 wavelength plate 7, the objective lens 8, the condenser lens 9, the photodetector 10, the signal processing circuit 11, the demodulation circuit 12, the focus error signal generation circuit 13, the tracking error signal generation circuit 14, the focus control circuit 16, and the tracking control circuit 17.

First, the recording of the data by this information recording/reproducing apparatus will be described. The recording of the data is controlled by the MPU 20. The recording data (data symbol) is modulated into a predetermined channel bit sequence by the modulation circuit 2. The channel bit sequence corresponding to the recording data is converted into a laser driving waveform by the laser control circuit 3. The laser control circuit 3 pulse-drives the laser unit 4, and the data corresponding to a desired bit sequence is recorded in the medium 1. A light beam for recording, radiated from the laser unit 4, forms parallel light by the collimator lens 5, and enters and passes through the PBS 6. The beam transmitted through the PBS 6 passes through the 1/4 wavelength plate 7, and is condensed on an information recording surface of the medium 1 by the objective lens 8. The condensed beam is maintained in a state in which a microspot is obtained on the recording surface by the focus control by the focus control circuit 16, and the tracking control by the tracking control circuit 17.

Subsequently, reproduction of the data by the information recording/reproducing apparatus will be described. The reproduction of the data is controlled by the MPU 20. The laser unit 4 radiates a light beam for reproduction based on a data reproducing instruction from the MPU 20. The light beam for reproduction, radiated from the laser unit 4, forms parallel light by the collimator lens 5, and enters and passes through the PBS 6. The light beam transmitted through the PBS 6 passes through the 1/4 wavelength plate 7, and is condensed on the information recording surface of the medium 1 by the objective lens 8. The condensed beam is maintained in the state in which the microspot is obtained on the recording surface by the focus control by the focus control circuit 16, and the tracking control by the tracking control circuit 17. In this case, the light beam for reproduction, with which the medium 1 is irradiated, is reflected by a reflective film or a reflective recording film in the information recording surface. The reflected light passes through the objective lens 8 in a reverse direction, and forms the parallel light again. The reflected light passes through the 1/4 wavelength plate 7, and has polarized light vertical to the incident light. The beam is reflected by the PBS 6. The beam reflected by the PBS 6 is formed into convergent light by the condenser lens 9, and enters the photodetector 10. The photodetector 10 comprises, for example, a four-division photodetector. The light beam, which has entered the photodetector 10, is photoelectrically converted into an electric signal, and amplified. The amplified signal is equalized and binarized in the signal processing circuit 11, and sent to the demodulation circuit 12. In the demodulation circuit 12, the signal is demodulated in accordance with a predetermined modulation system, and reproduced data is output.

Moreover, a focus error signal is generated by the focus error signal generation circuit 13 based on a part of the electric signal output from the photodetector 10. A tracking error signal is similarly generated by the tracking error signal generation circuit 14 based on a part of the electric signal output from the photodetector 10. The focus control circuit 16 controls the focus of the beam spot based on the focus error signal. The tracking control circuit 17 controls tracking of the beam spot based on the tracking error signal.

Here, the replacement process by the MPU 20 will be described. When the medium 1 is formatted, certification is executed. At this time, the MPU 20 detects defects in the medium. The defects detected at this time, that is, defect management information on the initial defects are recorded in the PDL in the DMA of the medium by the MPU 20. The defect management information includes an address of a replacing sector and that of a replaced sector. Even at a usual recording time, the MPU 20 detects the defects in the medium. The defects detected at this time, that is, defect management information on the secondary defects are recorded in the SDL in the DMA of the medium by the MPU 20. The defect management information includes an address of a head sector of a replacing ECC block, and that of a head sector of a replaced ECC block. An access to the replacing area is regarded as an access to the replaced area based on the PDL and the SDL.

It is to be noted that the present invention is not limited to the above-described embodiment, and can be variously modified without departing from the scope based on a technique usable at this time in a current or future implementing stage. The respective embodiments may be appropriately combined if possible. In this case, combined effects are obtained. Furthermore, the above-described embodiment includes various stages of the invention, and a certain invention can be extracted by an appropriate combination of a plurality of constituting elements described herein. For example, even if some constituting elements are removed from all of the constituting elements described in the embodiment, a constitution from which the constituting elements have been removed can be extracted as the invention.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information storage medium **characterized by** comprising:
a rewritable area, the rewritable area including a user area to store user data, and a defect management area to store defect management information associated with a defect area in the rewritable area;
the defect management area comprises a plurality of replacement areas;
at least a portion of the defect management information stored in one of the plurality of replacement areas being replaced is recorded in another of the plurality of replacement areas before the one replacement area becomes unusable; and
wherein at least one of the recordings between the replacement areas reuses a previous replacement area.

2. The information storage medium of claim 1 **characterized in that** the recording between the replacement areas is performed in a ring form among the replacement areas.

3. The information storage medium of claim 2 **characterized in that** the ring form reuses a first replacement area once the last replacement area has been used.

4. The information storage medium of claim 1, **characterized by** further comprising a conditions storage location to store conditions or a threshold value indicating a time to perform the replacement recording between the replacement areas.

5. The information storage medium according to claim 4, **characterized by** further comprising:
a rewritable optical disc having a lead-in area in an inner periphery and a lead-out area in an outer periphery;
wherein at least one of the lead-in areas and the lead-out areas has a plurality of reserved areas existing in a discrete manner; and
wherein at least one of the plurality of reserved areas is being used as the conditions storage location.

6. The information storage medium according to claim 4, **characterized by** further comprising:
a rewritable optical disc having a lead-in area in an inner periphery and a lead-out area in an outer periphery;
wherein at least one of the lead-in areas and the lead-out areas has a defect management information manager;
the defect management information manager comprises information indicating one currently used head location among the plurality of replacement areas and one or more reserved areas; and
wherein at least one of the reserved areas is being used as the conditions storage location.

7. The information storage medium according to claim 4, **characterized by** further comprising:
a rewritable optical disc having a lead-in area in an inner periphery and a lead-out area in an outer periphery;
wherein the optical disc has a disc definition structure area to record information on a disc definition structure in the defect management area;
the disc definition structure area includes one or more reserved areas; and
wherein at least one of the reserved areas is being used as the conditions storage location.

8. The information storage medium according to claim 4, **characterized by** further comprising:
a rewritable optical disc having a lead-in area in an inner periphery and a lead-out area in an outer periphery;
wherein the optical disc has a primary defect list area to record information of a primary defect list in the defect management area;
the primary defect list area comprises one or more reserved areas; and
wherein at least one of the reserved areas is being used as the conditions storage location.

9. The information storage medium according to claim 4, **characterized by** further comprising:
a rewritable optical disc having a lead-in area in an inner periphery and a lead-out area in an outer periphery;
wherein the optical disc has a secondary defect list area to record information of a secondary defect list in the defect management area;
the secondary defect list area comprising one or more reserved areas; and
wherein at least one of the reserved areas is being used as the conditions storage location.

10. A method of using an information storage medium comprising a rewritable area, the rewritable area comprising a user area to store user data; and a defect management area to store defect management information associated with a defect area in the rewritable area, the defect management area comprising a plurality of replacement areas, the method **characterized by** comprising:
recording at least a portion of the defect management information stored in one of the plurality of replacement areas in another of the plurality of replacement areas before the one replacement area becomes unusable in a replacing manner; and
wherein recording at least a portion of the defect management information between the replacement areas reuses a previous replacement area.

11. The method of claim 10 **characterized in that** recording between the replacement areas is performed in a ring form among the replacement areas.

12. The method of claim 11 **characterized in that** the ring form reuses a first replacement area once the last replacement area has been used.

13. The method of claim 10, **characterized in that** the other replacement area is disposed adjacent to the one of the plurality of replacement areas.

14. The method of claim 10, **characterized in that** the other replacement area is disposed at a predetermined interval from the one of the plurality of replacement areas.

15. The method of claim 10, **characterized by** further comprising filling the one replacement area with FFh after recording the defect management information in the other replacement area.

16. The method of claim 10, **characterized by** further comprising storing FFh in the replacement areas other than a replacement area in which the latest defect management information is stored among the plurality of replacement areas.

17. The method of claim 10, **characterized by** further comprising, for each sequence in a plurality of sequences of replacement areas, recording the defect management information stored in one of the plurality of replacement areas in another replacement area before the one replacement area becomes unusable in a replacing manner.

18. An apparatus which records or reproduces information by use of an information storage medium comprising a rewritable area, the rewritable area comprising a user area to store user data, and a defect management area to store defect management information associated with a defect area in the rewritable area, the defect management area comprising a plurality of replacement areas, the apparatus **characterized by** comprising:
a first unit configured to read the information from and write the information into the plurality of replacement areas of the user area and the defect management area of the information storage medium;
a second unit configured to record at least a portion of the defect management information stored in one of the plurality of replacement areas in a different one of the plurality of replacement areas before the one replacement area becomes unusable; and
a third unit configured to record the at least a portion of the defect management information between replacement areas in a previous replacement area.

19. The apparatus of claim 18, **characterized in that** the apparatus is configured to have a condition storage location for storing a condition or a threshold value indicating when to replacing the defect management information between the replacement areas.

20. The apparatus of claim 18 **characterized in that** the recording between the replacement areas is performed in a ring form among the replacement areas.
